# EUROPEAN PATENT SPECIFICATION

(11) **EP 2 892 362 B1**
(45) Date of publication and mention of the grant of the patent: **01.06.2016**
(21) Application number: 13782838.0
(22) Date of filing: 20.08.2013
(51) Int. Cl.: A23F 5/16, A23F 5/44

(54) **INSTANT COFFEE OR COFFEE SUBSTITUTE WITH REDUCED ACRYLAMIDE AND HYDROXYMETHYL FURFURAL CONTENT AND PRODUCTION METHOD THEREOF**
INSTANTKAFFEE ODER KAFFEEERSATZ MIT REDUZIERTEM ACRYLAMID- UND FURFURALHYDROXYMETHYLGEHALT UND HERSTELLUNGSVERFAHREN DAFÜR
CAFÉ INSTANTANÉ OU SUBSTITUT DE CAFÉ AYANT UNE TENEUR EN ACRYLAMIDE ET EN HYDROXYMÉTHYLFURFURAL RÉDUITE ET LEUR PROCÉDÉ DE PRODUCTION

(30) Priority: 05.09.2012 TR 201210156
(43) Date of publication of application: 15.07.2015
(73) Proprietor: Gokmen, Vural, Ankara (TR)
(72) Inventor: AKILLIOGLU, Halise Gül, Ankara (TR)
(74) Representative: Rapisardi, Mariacristina
(86) International application number: PCT/IB2013/056755
(87) International publication number: WO 2014/037837

(56) References cited:
- EP-A1- 2 160 948
- WO-A2-2005/094591
- US-A1- 2004 081 724
- BARBARA QUARTA ET AL: "Furfurals removal from roasted coffee powder by vacuum treatment", FOOD CHEMISTRY, ELSEVIER LTD, NL, vol. 130, no. 3, 21 July 2011 (2011-07-21) , pages 610-614, XP028109611, ISSN: 0308-8146, DOI: 10.1016/J.FOODCHEM.2011.07.083 [retrieved on 2011-07-28] cited in the application
- TOLGAHAN KOCADAGLI ET AL: "In depth study of acrylamide formation in coffee during roasting: role of sucrose decomposition and lipid oxidation", FOOD & FUNCTION, vol. 3, no. 9, 1 January 2012 (2012-01-01) , page 970, XP55096209, ISSN: 2042-6496, DOI: 10.1039/c2fo30038a

## Description

### Field of the Invention

The present invention relates to instant coffee and coffee substitute with reduced acrylamide and hydroxymethyl furfural (HMF) content wherein the carcinogenic and cytotoxic process components found in heat treated roasted foodstuffs especially such as coffee are minimized, and production method thereof.

### Background of the Invention

The method used in production of instant coffee in today's technology comprises a series of processes such as roasting of raw coffee beans, grinding, aroma separation, extraction, concentration and drying. During roasting of coffee beans, acrylamide and HMF are formed at varying concentrations depending on the intensity of the heat treatment that is applied. After the Swedish scientists (Tareke et al, 2002) determined presence of acrylamide, which is announced to be a potential carcinogen (International Agency for Research on Cancer, IARC, 1994), in heat treated foods; determination of the amount of acrylamide in various foods has gained importance. Taking into consideration the incidence of consumption of foods which contain a high concentration of acrylamide such as french fries, many bakery products and coffee, it is obviously necessary to reduce the amount of acrylamide in these foods. In addition to acrylamide, since HMF is also cytotoxic and mutagen, its amount should also be limited. Maximum limit specified for HMF is 40 ppm in honey and 20 ppm in fruit juices.

Studies are intensively carried out for reducing concentrations of acrylamide and HMF in various products. It has been concluded that reduction of heat treatment time and temperature (Surdyk et al., 2004;Taubert et al., 2004) and reduction of pH value (Jung et al., 2003; Rydberg et al., 2003) reduce formation of acrylamide. Use of asparaginase enzyme (Zyzak et al., 2003; Ciesarova et al., 2006) was also developed as another strategy. By using asparaginase, the asparagine amino acid playing a key role in acrylamide formation is converted to aspartic acid. There is a United States patent document numbered US20040081724 which discloses that roasted coffee beans having reduced amount of acrylamide can be obtained by using the said method.

United States patent document no. US20070178219, which is another patent document in the state of the art, discloses that acrylamide can be reduced by a method which eliminates asparagine by weakening the cell wall of asparagine-containing plants by microwave energy, ultrasonic energy, pressure force or an enzyme. The principle of this technique is the prevention of asparagine from entering into Maillard reaction. Asparagine is decomposed by asparaginase enzyme or a competitive medium is created to inhibit Maillard reaction of asparagine by using cysteine, lysine or glycine amino acids. It is disclosed that this method was tried for french fries and that it is also applicable for coffee beans.

In another related study conducted (Gökmen and 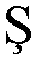 enyuva 2007a,b; Park et al., 2005), results are obtained demonstrating that divalent cations reduce acrylamide formation. Making use of this information, European patent document no. EP2160948 discloses that acrylamide formation is reduced by soaking chicory beans into solutions containing Ca²⁺ and Mg²⁺ before roasting.

In the Japanese patent document no. JP2007282537, superheated steam was used for roasting and it is mentioned that by means of this method while acrylamide content decreases, chlorogenic acid content increases.

In the International patent document no. WO2005094591, acrylamide content can also be reduced by 48% by fermenting the coffee beans with lactic acid bacteria before roasting. By means of this process, pH of the medium decreases and thus Maillard reaction slows down. When the coffee beans are roasted after fermentation, less color formation is observed.

In addition to all of these, in a research (Quarta and Anese, 2012) conducted, vacuum application for reducing furfural and HMF content in coffee is tried and it is determined that it is not very effective in reduction of HMF in soluble coffee. When coffee sample was hydrated before vacuum application, furfural content could be reduced by 100% and HMF content by 20%. However it is reported that serious losses occurred in the volatile smell and aroma components of coffee in this technique.

Upon consideration of practiced techniques today; firstly decreasing the heat treatment load was tried for reducing acrylamide and HMF, however this was not found to be very useful since it also reduced the benefits provided by heat treatment. Reducing the thermal load also reduces the rate of Maillard reaction and thus concentrations of Maillard reaction products, which are responsible for development of the taste and smell desired in the product. This is the most significant disadvantage of changing the heat treatment parameters.

Since asparagine amino acid in food plays a key role in production of acrylamide, asparagine removal is used as an alternative technique for limiting acrylamide amount. Asparagine in the food is converted into aspartic acid by using asparaginase enzyme and it is prevented from entering into Maillard reaction. This method is applied in production of biscuits and it is stated that it can be applied in foods, which include dough production in their process such as cakes, breads. However it is stated that its applicability in french fries is difficult. Additionally, when it is used in production of coffee beans with reduced asparagine and thus acrylamide content, since Maillard reaction is again limited, loss of taste, smell and aroma occurs in instant coffee production.

Strategy of reducing acrylamide by immersing the raw material in solutions containing divalent cations (Ca²⁺ etc.) may cause taste defects when used in production of instant coffee. Additionally, cations such as Ca²⁺, Mg²⁺ promote glucose dehydration, and thus accelerate HMF formation.

It is observed that generally mitigation strategies for acrylamide and HMF content in foods is based on limiting Maillard reaction. As Maillard reaction is responsible for formation of the desired taste-smell in the product, use of these techniques especially in considerably aromatic products such as coffee is disadvantageous.

### Summary of the Invention

The objective of the present invention is to provide instant coffee or coffee substitute with reduced acrylamide and hydroxymethyl furfural (HMF) content and production method thereof which is performed without requiring any change in heat treatment (such as roasting).

Another objective of the present invention is to provide instant coffee or coffee substitute with reduced acrylamide and hydroxymethyl furfural (HMF) content and production method thereof without any loss of taste, smell or aroma.

A further objective of the present invention is to provide instant coffee or coffee substitute whose harms on human health are reduced or completely eliminated and acrylamide and hydroxymethyl furfural (HMF) contents are reduced, and production method thereof.

Another objective of the present invention is to provide instant coffee or coffee substitute with reduced acrylamide and hydroxymethyl furfural (HMF) content and production method thereof wherein extracts obtained from grains or grainlike roasted foodstuffs are fermented.

### Detailed Description of the Invention

The inventive instant coffee or coffee substitute with reduced acrylamide and hydroxymethyl furfural (HMF) content and production method thereof is illustrated in the accompanying figure wherein

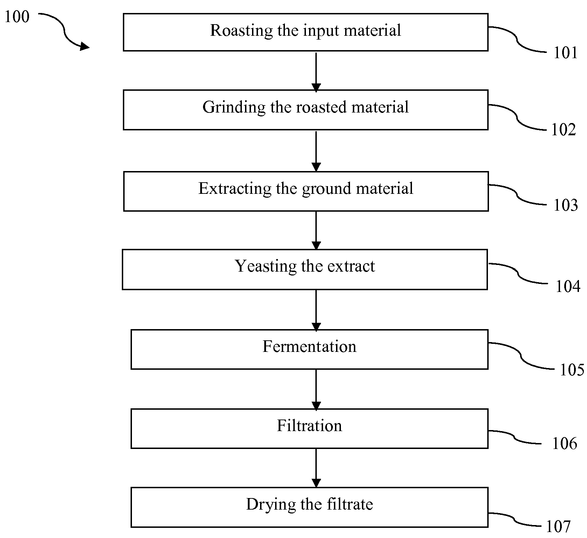

**Figure 1** is the flow chart of the production method.

Instant coffee or coffee substitute with reduced acrylamide and hydroxymethyl furfural (HMF) content and production method thereof (100) developed to fulfill the objective of the present invention comprises the steps of
- roasting the input material (101),
- grinding the roasted material (102),
- extraction of the ground material (103),
- yeasting the extract (104),
- fermentation (105),
- filtration (106),
- drying the filtrate (107).

In the inventive instant coffee or coffee substitute production method (100) firstly roasting (101) is performed. Seeds, beans and/or fruits obtained from different plants and trees can be used as the input materials. In the preferred embodiment of the invention, coffee beans that are obtained from the seeds of the fruits of coffee trees are used. After the mature coffee beans are collected, they are cleaned by being processed according to wet or dry processing technique. The roasting (101) process is required for the said cleaned coffee beans to give taste, smell and aroma to the final product. Roasting (101) can be carried out at different temperature and time conditions. In the preferred embodiment of the invention, temperatures in the range of 200-250°C are used to obtain the taste and smell specific to the material. Formation of the taste and smell specific to coffee is provided by Maillard reaction. Maillard reaction takes place between free amino groups and carbonyl groups and accelerates as the temperature rises. While enabling formation of the features desired in the product, these reactions also cause formation of various carcinogenic compounds. Acrylamide and hydroxymethyl furfural (HMF) are the most known among these compounds.

The roasted material is then ground by the help of a grinder (102) and broken up into smaller particles.

The ground material is subjected to extraction (103) under a certain pressure and temperature, and then all soluble components of the coffee are taken into a liquid medium, whereas the insoluble components are removed. In the preferred embodiment of the invention, extraction (103) is carried out by using water at 10-15 bar pressure and 90-150°C temperature. The final concentration of the extract is adjusted so that it will contain 10-20% soluble solid.

The extract containing 10-20% soluble solid obtained after extraction (103) is taken to the step of yeasting (104). In this step (104), mixtures are prepared by adding sucrose and yeast to the extracts. In the preferred embodiment of the invention, baker's yeast (*Saccharomyces cerevisiae*), which does not have any harm on human health and which is used in production of many fermented products, is used as the yeast. Baker's yeast basically needs carbon and nitrogen source and is easily active at such mediums. In the preferred embodiment of the invention, the extract containing 10-20% soluble solid is mixed with %0.5-1 yeast (w/v) and 1-10% sucrose (w/v) and thereby fermentation takes place.

The mixtures that are prepared are fermented (105) with the impact of the step of yeasting (104), and at the same time acrylamide and HMF formed after roasting (102) are reduced by being metabolized by the yeast. In the preferred embodiment of the invention, fermentation (105) continues for 12-48 hours at temperatures 25-30°C.

After fermentation (105) ceases, filtration (106) is carried out in order to separate and remove the yeast cells from the product.

The filtrate which is cleaned from the yeast cells is finally dried (107). Drying can be applied in two different ways, namely spray drying or freeze drying.

Following drying (107), the final product is obtained such that there is no loss of taste-smell and aroma and that it is mostly cleared of the undesirable carcinogenic and cytotoxic substances.

Acrylamide and HMF concentration in the final product can be adjusted by changing the percentages of extract, yeast and sucrose in the mixtures prepared during the step of yeasting (104). Examples and results pertaining to the mixtures wherein the extracts obtained from the coffee beans are used are given below.

### Example 1

A mixture is prepared by 20% coffee extract (w/v), 10% sucrose (w/v) and 1% baker's yeast (w/v); and is allowed to ferment for 12 hours. The HMF content in the final product, which is thus produced, is observed to decrease by 94% relative to the HMF content in the roasted coffee.

### Example 2

A mixture is prepared by 20% coffee extract (w/v), 10% sucrose (w/v) and 1% baker's yeast (w/v); and the extract is allowed to ferment for 24 hours. The acrylamide content in the final product, which is thus produced, is observed to decrease by 52% relative to the acrylamide content in the roasted coffee. HMF content decreased by 98.6%.

### Example 3

A mixture is prepared by 20% coffee extract (w/v), 10% sucrose (w/v) and 1% baker's yeast (w/v); and the extract is allowed to ferment for 48 hours. The acrylamide content in the final product, which is thus produced, is observed to decrease by 72.7% relative to the acrylamide content in the roasted coffee. HMF content decreased by 100%.

As it is seen from the above given examples, fermentation time plays a significant role in reducing acrylamide and HMF content in the product.

## Claims

1. A production method of instant coffee or coffee substitute with reduced acrylamide and hydroxymethyl furfural (HMF) content (100) comprising the steps of
- roasting the input material (101),
- grinding the roasted material (102),
- extraction of the ground material (103), and
**characterized by** the steps of
- roasting the input materials (101) wherein seeds, fruits and/or beans obtained from different plants and trees are used as the input materials,
- yeasting the extract (104) wherein sucrose and yeast are added and mixed in the extract obtained after extraction (103),
- fermentation (105), wherein the extract is fermented with the impact of yeasting the extract (104), and wherein acrylamide and HMF formed after roasting (101) are reduced by being metabolized by the yeast,
- filtration (106) wherein, after fermentation (105) ceases, the yeast cells are separated and removed from the product,
- drying the filtrate which is cleared of the yeast cells (107).

2. A production method of instant coffee or coffee substitute with reduced acrylamide and hydroxymethyl furfural (HMF) content (100) according to Claim 1, **characterized by** the step of roasting the input material (101) wherein coffee beans are used as the input material.

3. A production method of instant coffee or coffee substitute with reduced acrylamide and hydroxymethyl furfural (HMF) content (100) according to any one of the preceding claims, **characterized by** the step of roasting the input material (101) wherein temperatures of 200-250°C are used to form the taste and smell specific to the material.

4. A production method of instant coffee or coffee substitute with reduced acrylamide and hydroxymethyl furfural (HMF) content (100) according to any one of the preceding claims, **characterized by** the step of extraction of the ground material (103) which is preferably performed with water at 10-15 bar pressure and 90-150°C temperature and wherein all soluble components of the material are taken into the liquid medium and the insoluble components are removed.

5. A production method of instant coffee or coffee substitute with reduced acrylamide and hydroxymethyl furfural (HMF) content (100) according to any one of the preceding claims, **characterized by** the step of yeasting the extract (104) wherein baker's yeast (*Saccharomyces cerevisiae*), which does not have any harm on human health and which is used in production of many fermented products, is used as the yeast.

6. A production method of instant coffee or coffee substitute with reduced acrylamide and hydroxymethyl furfural (HMF) content (100) according to any one of the preceding claims, **characterized by** the step of yeasting the extract (104) wherein the mixture comprising %0.5-1 yeast (w/v), 1-10% sucrose (w/v) and 10-20% extract (w/v) is prepared.

7. A production method of instant coffee or coffee substitute with reduced acrylamide and hydroxymethyl furfural (HMF) content (100) according to any one of the preceding claims, **characterized by** the step of fermentation (105) which is continued for 12-48 hours at a temperature of 25-30°C after the process of yeasting (104).

8. A production method of instant coffee or coffee substitute with reduced acrylamide and hydroxymethyl furfural (HMF) content (100) according to any one of the preceding claims, **characterized by** the step of drying the filtrate either by spray drying or freeze drying (107) wherein the filtrate obtained as a result of filtration (106).

9. Instant coffee or coffee substitute with reduced acrylamide and hydroxymethyl furfural (HMF) content, which is obtained by a method according to any of the preceding claims, and which is completely or partially cleared of the carcinogenic and cytotoxic substances without any loss of its taste-smell and aroma.

## Patentansprüche

1. Herstellungsverfahren für Instantkaffee oder Kaffeeersatz mit reduziertem Gehalt an Acrylamid und Hydroxymethylfurfural (HMF) (100), umfassend folgende Schritte:
- Rösten des Ausgangsmaterials (101),
- Mahlen des gerösteten Materials (102),
- Ausziehen des gemahlenen Materials (103), und **gekennzeichnet durch** die folgenden Schritte:
- Rösten des Ausgangsmaterials (101), wobei aus unterschiedlichen Pflanzen und Bäumen gewonnene Samen, Früchte und/oder Bohnen als Ausgangsmaterial verwendet werden,
- Verhefung des Auszugs (104), wobei dem nach dem Schritt des Ausziehens (103) gewonnenen Auszug Saccharose und Hefe zugegeben und untergemischt werden,
- Fermentation (105), wobei der Auszug **durch** die Verhefung des Auszugs (104) fermentiert, und wobei das nach dem Rösten (101) entstandene Acrylamid und HMF durch die Hefe abgebaut und damit reduziert werden,
- Filtration (106) wobei die Hefezellen nach Endigung der Fermentation (105) vom Produkt getrennt und entfernt werden,
- Trocknen des von den Hefezellen bereinigten Filtrats (107).

2. Herstellungsverfahren für Instantkaffee oder Kaffeeersatz mit reduziertem Gehalt an Acrylamid und Hydroxymethylfurfural (HMF) (100) nach Anspruch 1, **gekennzeichnet durch** den Schritt des Röstens des Ausgangsmaterials (101), wobei Kaffeebohnen als Ausgangsmaterial verwendet werden.

3. Herstellungsverfahren für Instantkaffee oder Kaffeeersatz mit reduziertem Gehalt an Acrylamid und Hydroxymethylfurfural (HMF) (100) nach einem der vorstehenden Ansprüche, **gekennzeichnet durch** den Schritt des Röstens des Ausgangsmaterials (101), wobei Temperaturen von 200-250 °C angewendet werden, um den für das Material typischen Geschmack und Geruch zu bilden.

4. Herstellungsverfahren für Instantkaffee oder Kaffeeersatz mit reduziertem Gehalt an Acrylamid und Hydroxymethylfurfural (HMF) (100) nach einem der vorstehenden Ansprüche, **gekennzeichnet durch** den Schritt des Ausziehens des gemahlenen Materials (103), welcher vorzugsweise mit Wasser bei einem Druck von 10-15 bar und einer Temperatur von 90-150 °C erfolgt, und wobei alle löslichen Bestandteile des Materials von dem flüssigen Medium aufgenommen und die nicht löslichen Bestandteile entfernt werden.

5. Herstellungsverfahren für Instantkaffee oder Kaffeeersatz mit reduziertem Gehalt an Acrylamid und Hydroxymethylfurfural (HMF) (100) nach einem der vorstehenden Ansprüche, **gekennzeichnet durch** den Schritt der Verhefung des Auszugs (104), wobei Backhefe (Saccharomyces cerevisiae) zugegeben wird, welche in keiner Weise gesundheitsschädigend ist und in der Herstellung zahlreicher fermentierter Produkte als Hefe verwendet wird.

6. Herstellungsverfahren für Instantkaffee oder Kaffeeersatz mit reduziertem Gehalt an Acrylamid und Hydroxymethylfurfural (HMF) (100) nach einem der vorstehenden Ansprüche, **gekennzeichnet durch** den Schritt der Verhefung des Auszugs (104), wobei die Mischung mit 0,5-1 % Hefe (Gew./Vol.), 1-10 % Saccharose (Gew./Vol.) und 10-20 % Auszug (Gew./Vol.) zubereitet wird.

7. Herstellungsverfahren für Instantkaffee oder Kaffeeersatz mit reduziertem Gehalt an Acrylamid und Hydroxymethylfurfural (HMF) (100) nach einem der vorstehenden Ansprüche, **gekennzeichnet durch** den Schritt der Fermentation (105), welcher 12-48 Stunden bei einer Temperatur von 25-30 °C nach der Verhefung (104) andauert.

8. Herstellungsverfahren für Instantkaffee oder Kaffeeersatz mit reduziertem Gehalt an Acrylamid und Hydroxymethylfurfural (HMF) (100) nach einem der vorstehenden Ansprüche, **gekennzeichnet durch** den Schritt der Trocknung des Filtrats entweder **durch** Sprühtrocknung oder **durch** Gefriertrocknung (107), wobei das Filtrat **durch** Filtration (106) gewonnen wurde.

9. Instantkaffee oder Kaffeeersatz mit reduziertem Gehalt an Acrylamid und Hydroxymethylfurfural (HMF), der durch eine Methode nach einem der vorstehenden Ansprüche gewonnen wird und ohne jeglichen Verlust seines Geschmacks-Geruchs und Aromas vollständig oder teilweise von den krebserregenden und zytotoxischen Stoffen befreit wurde.

## Revendications

1. Procédé de production d'un café instantané ou substitut de café ayant une teneur réduite (100) en acrylamide et en hydroxyméthylfurfural (HMF) comprenant les étapes de
- torréfier la matière de départ (101),
- moudre la matière torréfiée (102),
- extraire la matière moulue (103), et
**caractérisé par** les étapes de :
- torréfier les matières de départ (101), dans lequel des graines, des fruits et/ou des grains obtenus à partir de plantes ou d'arbres différents sont utilisés comme matières de départ,
- effectuer un levurage de l'extrait (104), dans lequel saccharose et levure sont ajoutées et mélangées dans l'extrait obtenu après extraction (103),
- fermentation (105), dans lequel l'extrait est fermenté avec l'impact du levurage de l'extrait (104), et dans lequel l'acrylamide et l'HMF formés après torréfaction (101) sont réduits en étant métabolisés par la levure,
- filtration (106), dans lequel, après arrêt de la fermentation (105), les cellules de levure sont séparées et retirées du produit,
- dessiccation du filtrat qui ne comporte plus de cellules de levure (107).

2. Procédé de production d'un café instantané ou substitut de café ayant une teneur réduite (100) en acrylamide et en hydroxyméthylfurfural (HMF) selon la revendication 1, **caractérisé par** l'étape de torréfaction de la matière de départ (101) dans lequel des grains de café sont utilisés comme matière de départ.

3. Procédé de production d'un café instantané ou substitut de café ayant une teneur réduite (100) en acrylamide et en hydroxyméthylfurfural (HMF) selon l'une quelconque des revendications précédentes, **caractérisé par** l'étape de torréfaction de la matière de départ (101) dans lequel des températures de 200-250 °C sont employées pour donner le goût et l'arôme spécifique à la matière.

4. Procédé de production d'un café instantané ou substitut de café ayant une teneur réduite (100) en acrylamide et en hydroxyméthylfurfural (HMF) selon l'une quelconque des revendications précédentes, **caractérisé par** l'étape d'extraction de la matière moulue (103) qui est de préférence effectuée avec de l'eau à une pression comprise entre 10 et 15 bars et une température comprise entre 90 et 150 °C et dans lequel l'ensemble des composants solubles de la matière sont pris dans le milieu liquide et les composants insolubles retirés.

5. Procédé de production d'un café instantané ou substitut de café ayant une teneur réduite (100) en acrylamide et en hydroxyméthylfurfural (HMF) selon l'une quelconque des revendications précédentes, **caractérisé par** l'étape de levurage de l'extrait (104) dans lequel la levure de boulanger (Saccharomyces cerevisiae), qui ne présente aucun risque pour la santé humaine et qui est utilisée dans la production de nombreux produits fermentés, est utilisée comme levure.

6. Procédé de production d'un café instantané ou substitut de café ayant une teneur réduite (100) en acrylamide et en hydroxyméthylfurfural (HMF) selon l'une quelconque des revendications précédentes, **caractérisé par** l'étape de levurage de l'extrait (104) dans lequel le mélange comprenant 0,5-1% de levure (p/v), 1-10% de saccharose (p/v) et 10-20% extrait (p/v) est préparé.

7. Procédé de production d'un café instantané ou substitut de café ayant une teneur réduite (100) en acrylamide et en hydroxyméthylfurfural (HMF) selon l'une quelconque des revendications précédentes, **caractérisé par** l'étape de fermentation (105) qui est poursuivie pendant 12 à 48 heures à une température comprise entre 25 et 30 °C après le processus de levurage (104).

8. Procédé de production d'un café instantané ou substitut de café ayant une teneur réduite (100) en acrylamide et en hydroxyméthylfurfural (HMF) selon l'une quelconque des revendications précédentes, **caractérisé par** l'étape de dessiccation du filtrat soit par séchage par pulvérisation ou par lyophilisation (107) dans lequel le filtrat est obtenu suite à filtration (106).

9. Café instantané ou substitut de café ayant une teneur réduite en acrylamide et en hydroxyméthylfurfural (HMF), étant obtenu par un procédé selon l'une quelconque des revendications précédentes, et dont les substances cytotoxiques et cancérigènes ont été complètement ou partiellement éliminées sans aucune perte de goût-parfum et arôme.
